# EUROPEAN PATENT APPLICATION

(11) **EP 3 136 137 A1**
(43) Date of publication of application: **01.03.2017**
(21) Application number: 15782856.7
(22) Date of filing: 24.04.2015
(51) Int. Cl.: G02B 1/14, B32B 27/40, G02C 7/02

(54) **SPECTACLE LENS**

(30) Priority: 24.04.2014 JP 2014090740
(71) Applicant: Hoya Lens Thailand Ltd., Patumthani (TH)
(72) Inventor: HAMAKUBO, Katsushi, Tokyo 161-8525 (JP)
(74) Representative: Hoffmann Eitle
(86) International application number: PCT/JP2015/062596
(87) International publication number: WO 2015/163463

(57) **Abstract**

Provided is a spectacle lens which exhibits excellent weather resistance. The spectacle lens includes a lens substrate, a primer layer, and a hard coat layer and has a film thickness of the hard coat layer of 10 µm or more and 100 µm or less and a film thickness of the primer layer of 0.4 µm or more and 2.0 µm or less.

## Description

### Technical Field

The present invention relates to a spectacle lens having a primer layer and a hard coat layer.

### Background Art

Although spectacle lenses are required to have various properties, a nature to be hardly scratched as a user uses the spectacle lens in daily life, namely, abrasion resistance is required. Surface films such as a hard coat film and an antireflection film (AR film) are formed on the surface of a spectacle lens in consideration of abrasion resistance. The evaluation on abrasion resistance is carried out for selection of the spectacle lens substrate or the surface film in the development stage of the spectacle lens or for quality control in the manufacturing process of the spectacle lens.

As a general abrasion resistance test of spectacle lenses in the prior art, the Bayer test is known. In the Bayer test, sands and a spectacle lens are put in a vessel and the vessel is shaken to rub the lens with the sands, whereby the abrasion resistance of the spectacle lens is evaluated. According to this method, the brief tendency of abrasion resistance can be determined, but there are a variety of causes for the scratches formed in actual status of use, and it has not been necessarily able to cope with scratches of the spectacle lens formed in actual use only by the Bayer test.

In Patent Literature 1, a spectacle lens which has a surface film and a substrate and is characterized in that the tip bulge starting load (W_{I}) determined by the testing method using a diamond stylus is 60 g or more is disclosed as a spectacle lens exhibiting high abrasion resistance with respect to the scratches as formed when the spectacle lens is rubbed with a wood or a metal or hit by a pebble in actual use.

In Patent Literature 2 , an optical article in which a primer layer and a hard coat layer are formed on the surface of a plastic substrate, the primer layer is formed from a coating composition containing (A) a polyurethane resin, (B) metal oxide fine particles, (C) anorganosilicon compound, and the hard coat layer is formed from a coating composition containing metal oxide fine particles which do not contain (D) titanium oxide is disclosed for the purpose of providing an optical article that is configured to include a plastic substrate, a primer layer, and a hard coat layer, exhibits excellent light resistance as well as hardly causes the interference fringe.

In Patent Literature 3, a method for manufacturing a plastic lens which includes a step of forming a hard coat layer on a plastic lens substrate directly or by sandwiching a primer layer by coating with a first composition containing metal oxide fine particles and an organosilicon compound in a weight ratio range of from 0.6 to 1.2 and a step of forming an antireflection layer on the surface of the hard coat layer by coating with a second composition containing an organosilicon compound is disclosed for the purpose of providing a method for manufacturing a plastic lens which includes an organic antireflection layer and thus exhibits high light resistance.

### Citation List

### Patent Literature

Patent Literature 1: JP 2013-205777 A
Patent Literature 2: JP 2010-91995 A
Patent Literature 3: JP 2007-86413 A

### Summary of Invention

### Technical Problem

According to the spectacle lens described in Patent Literature 1, it is possible to enhance the scratch resistance to be evaluated by film peeling off load value in the diamond scratch test. However, it has been revealed that there is a problem that the impact resistance and weather resistance of the spectacle lens decrease as the film thickness of the hard coat layer is increased in order to obtain excellent scratch resistance. In Patent Literatures 2 and 3, the film thickness of the primer layer is not particularly investigated.

An obj ect of the present invention is to provide a spectacle lens which exhibits excellent weather resistance.

### Solution to Problem

In other words, the present invention relates to the following spectacle lens.
[1] A spectacle lens including a lens substrate, a primer layer, and a hard coat layer, in which a film thickness of the hard coat layer is 10 µm or more and 100 µm or less, and a film thickness of the primer layer is 0.4 µm or more and 2.0 µm or less.
[2] The spectacle lens according to [1], in which a film thickness of the primer layer is 0.4 µm or more and 1.2 µm or less.
[3] The spectacle lens according to [1] or [2], in which the primer layer contains a resin.
[4] The spectacle lens according to [3], in which the primer layer contains a polyurethane resin.
[5] The spectacle lens according to any one of [1] to [4], in which the primer layer does not contain a metal atom.
[6] The spectacle lens according to any one of [1] to [5], in which the hard coat layer is obtained by curing a curable composition containing inorganic oxide particles and a silicon compound.

### Advantageous Effects of Invention

According to the present invention, it is possible to provide a spectacle lens which exhibits excellent weather resistance.

### Description of Embodiments

The spectacle lens of the present invention is a spectacle lens including a lens substrate, a primer layer, and a hard coat layer.

In the spectacle lens of the present invention, the film thickness of the hard coat layer is 10 µm or more and 100 µm or less and the film thickness of the primer layer is 0.4 µm or more and 2.0 µm or less.

By having the above configuration, it is possible to obtain a spectacle lens exhibiting excellent weather resistance.

The present inventors have found out that it is possible to enhance the impact resistance and further to obtain a spectacle lens which also exhibits excellent weather resistance by setting the film thickness of the primer layer into a predetermined range. In other words, by having the above configuration, it is possible to obtain a spectacle lens which exhibits excellent scratch resistance, excellent impact resistance, and excellent weather resistance such as crack resistance against hot water and QUV resistance.

The film thickness of the hard coat layer is 10 µm or more and 100 µm or less in order to obtain excellent scratch resistance. The film thickness is preferably 12 µm or more and more preferably 15 µm or more from the viewpoint of scratch resistance. The film thickness is preferably 80 µm or less, more preferably 60 µm or less, and even more preferably 40 µm or less from the viewpoint of ease of manufacture. The "film thickness" means an average film thickness, and the measuring method thereof is described in Examples.

The film thickness of the primer layer is 0.4 µm or more in order to obtain excellent impact resistance in a spectacle lens having a hard coat layer having the film thickness described above. In addition, the film thickness is preferably 0.6 µm or more from the viewpoint of obtaining excellent impact resistance, abrasion resistance, and hydrostatic resistance. The film thickness of the primer layer is 2.0 µm or less in order to obtain excellent weather resistance in a spectacle lens having a hard coat layer which has the film thickness described above and exhibits excellent scratch resistance. In addition, an effect of being able to improve the scratch resistance is obtained in the range. The film thickness is preferably 1. 2 µm or less from the viewpoint of excellent weather resistance and scratch resistance, and it is preferably 0.9 µm or less from the viewpoint of excellent weather resistance, scratch resistance, and interference fringe suppression.

Hereinafter, the configuration of the spectacle lens of the present invention will be described in detail.

### (Lens substrate)

With regard to the lens substrate, examples of the material to be used in the lens substrate of a spectacle lens may include plastics such as a polyurethane-based material (for example, polyurethane, polyurethane urea, polythiourethane), polycarbonate, and diethylene glycol-bis-allyl-carbonate and inorganic glass. The thickness and diameter of the lens substrate are not particularly limited. Usually, the thickness is about from 1 to 30 mm and the diameter is about from 50 to 100 mm. In a case in which the spectacle lens of the present invention is a spectacle lens for vision correction, it is usual to use those having a refractive index ne of about from 1.5 to 1.8 as the lens substrate. Colorless ones are usually used as the lens substrate, but it is also possible to use colored ones as long as the transparency is not impaired. In addition, the surface shape of the substrate on which a cured film is formed is not particularly limited, and it can be an arbitrary shape such as a flat shape, a convex shape, or a concave shape.

### [Functional layer]

In the spectacle lens of the present invention, a functional layer including at least a primer layer and a hard coat layer is provided on the lens substrate. Examples of other functional layers may include an interference fringe suppressing layer, apolarizing layer, andaphotochromic layer. Inaddition, it is also possible to further provide functional layers such as an antireflection layer, a water repellent film, an ultraviolet absorbing film, an infrared absorbing film, a photochromic film, and an antistatic film on the hard coat layer if necessary. With regard to functional layers other than these, known techniques related to spectacle lenses can be applied.

In the spectacle lens of the present invention, it is preferable to laminate the primer layer and the hard coat layer in this order from the substrate side.

Inaddition, in the spectacle lens of the present invention, it is preferable to laminate the interference fringe suppressing layer, the primer layer, and the hard coat layer in this order from the substrate side, and it is more preferable to laminate the interference fringe suppressing layer, the primer layer, the hard coat layer, and the antireflection layer in this order from the substrate side.

### (Hard coat layer)

The hard coat layer is obtained, for example, by curing a curable composition containing inorganic oxide particles (hereinafter, referred to as the "component (A)") and a silicon compound (hereinafter, referred to as the "component (B) "). The curable composition preferably contains the component (A), the component (B), andapolyfunctional epoxycompound (hereinafter, referred to as the "component (C)").

Examples of the component (A) may include particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅), and the like, and the component (A) is preferably silicon oxide. These inorganic oxide particles may be used singly or two or more kinds thereof may be concurrently used. In addition, it is also possible to use composite oxide particles of two or more kinds of inorganic oxides. The particle size of the inorganic oxide particles is preferably in a range of from 5 to 3 0 nm from the viewpoint of achieving both abrasion resistance and optical properties.

The component (B) is a silicon compound, and it is preferably a silicon compound having a hydrolyzable group and more preferably a silane coupling agent having an organic group to be bonded to a silicon atom and a hydrolyzable group.

Examples of the hydrolyzable group may include an alkoxy group, an aryloxy group, and a hydroxyl group, and the hydrolyzable group is preferably an alkoxy group.

The silicon compound is preferably an organic silicon compound represented by the following general formula (I) or a hydrolysate thereof.

(R¹)ₐ(R³)_{b}Si(OR²)_{4-(a+b)} ... (I)

In the general formula (I), a is 0 or 1 and b is 0 or 1, and preferably a is 1 and b is 0 or 1.

R¹ represents an organic group having a functional group such as an epoxy group such as a glycidoxy group, a vinyl group, a methacryloxy group, an acryloxy group, a mercapto group, an amino group, or a phenyl group, and preferably R¹ represents an organic group having an epoxy group. The functional group may be directly bonded to a silicon atom or indirectly bonded thereto via a linking group such as an alkylene group.

R² represents, for example, a hydrogen atom, an alkyl group, an acyl group, or an aryl group, and preferably R² represents an alkyl group.

The alkyl group represented by R² is, for example, a straight-chain or branched alkyl group having from 1 to 4 carbon atoms, and specific examples thereof may include a methyl group, an ethyl group, a propyl group, and a butyl group, and preferably the alkyl group is a methyl group or an ethyl group.

The acyl group represented by R² is, for example, an acyl group having from 1 to 4 carbon atoms, and specific examples thereof may include an acetyl group, a propionyl group, an oleyl group, and a benzoyl group.

The aryl group represented by R² is, for example, an aryl group having from 6 to 10 carbon atoms, and specific examples thereof may include a phenyl group, a xylyl group, and a tolyl group.

R³ can be an alkyl group or an aryl group.

The alkyl group represented by R³ is, for example, a straight-chain or branched alkyl group having from 1 to 6 carbon atoms, and specific examples thereof may include a methyl group, an ethyl group, a propyl group, a butyl group, a pentyl group, and a hexyl group.

The aryl group represented by R³ is, for example, an aryl group having from 6 to 10 carbon atoms, and specific examples thereof may include a phenyl group, a xylyl group, and a tolyl group.

Specific examples of the component (B) may include glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-lycidoxypropylvinyldimethoxysilane, γ-glycidoxypropylvinyldiethoxysilane, γ-glycidoxypropylphenyldimethoxysilane, γ-glycidoxypropylphenyldiethoxysilane,
methyl silicate, ethyl silicate, n-propyl silicate, i-propyl silicate, n-butyl silicate, sec-butyl silicate, t-butyl silicate, tetraacetoxysilane, methyltrimethoxysilane, methyltriethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenethyloxysilane, ethyltrimethoxysilane, ethyltriethoxysilane, vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(δ-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, and methylvinyldiethoxysilane.

Examples of the commercially available silane coupling agent may include the KBM-303, KBM-402, KBM-403, KBE402, KBE403, KBM-1403, KBM-502, KBM- 503, KBE-502, KBE-503,KBM-5103, KBM-602, KBM-603, KBM-903, KBE-903, KBE-9103, KBM-573, KBM-575, KBM-9659, KBE-585, KBM-802, KBM-803, KBE-846, and KBE-9007 of trade names manufactured by Shin-Etsu Chemical Co., Ltd.

The component (C) is a polyfunctional epoxy compound containing two or more epoxy groups in one molecule. It is preferable to contain two or three epoxy groups in one molecule.

Specific examples of the component (C) may include aliphatic epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalate, trimethylolpropane diglycidyl ether, trimethylolpropane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydroxyethyl) isocyanurate, and triglycidyl ether of tris(2-hydroxyethyl) isocyanurate, alicyclic epoxy compounds such as isophorone diol diglycidyl ether and bis-2,2-hydroxycyclohexylpropane diglycidyl ether, and aromatic epoxy compounds such as resorcinol diglycidyl ether, bisphenol A diglycidyl ether, bisphenol F diglycidyl ether, bisphenol S diglycidyl ether, orthophthalic acid diglycidyl ester, phenol novolac polyglycidyl ether, and cresol novolac polyglycidyl ether. As the component (C), a compound containing two or three epoxy groups (bifunctional or trifunctional epoxy compound) is even more preferable from the viewpoint of adhesive property with the adjacent layer or the lens substrate.

Examples of the commercially available polyfunctional epoxy compound may include the EX-201, EX-211, EX-212, EX-252, EX-313, EX-314, EX-321, EX-411, EX-421, EX-512, EX-521, EX-611, EX-612, EX-614, and EX-614B of "DENACOL" series of a trade name manufactured by Nagase ChemteX Corporation.

The curable composition can be prepared by mixing optional components such as an organic solvent, a surfactant (leveling agent), and a curing catalyst if necessary in addition to the components (A) to (C) described above.

The content of the component (A) is preferably 20% by mass or more, more preferably 30% by mass or more, and even more preferably 40% by mass or more in the solid of the curable composition, and it is preferably 80% by mass or less, preferably 70% by mass or less, and even more preferably 60% by mass or less in the solid of the curable composition.

The content of the component (B) is preferably 5% by mass or more, more preferably 10% by mass or more, and even more preferably 15% by mass or more in the solid of the curable composition, and it is preferably 80% by mass or less, preferably 70% by mass or less, and even more preferably 60% by mass or less in the solid of the curable composition.

The content of the component (C) is preferably 0% by mass or more, more preferably 10% by mass or more, and even more preferably 15% by mass or more in the solid of the curable composition, and it is preferably 50% by mass or less, more preferably 40% by mass or less, and even more preferably 30% by mass or less in the solid of the curable composition.

The filler/matrix ratio (hereinafter, also simply referred to as the "F/M ratio") is preferably 0.5 or more, more preferably 0.6 or more, and even more preferably 0.7 or more, and it is preferably 2.0 or less, more preferably 1.8 or less, and even more preferably 1.5 or less.

Incidentally, the F/Mratiomeans the mass ratio [component (A)/(component (B) + component (C))] of the component (A) to the total mass of the component (B) and the component (C).

The hard coat layer can be formed by coating a plastic lens substrate with the curable composition and subjecting the coated curable composition to a curing treatment (heat curing, photocuring, or the like) in accordance with the curable group. As the coating means of the curable composition, it is possible to apply a method that is usually used such as a dipping method, a spin coating method, a spray method. The curing treatment is usually conducted by heating for a curable composition containing a polyfunctional epoxy compound as the component (C). The curing treatment by heating can be conducted, for example, by placing a lens coated with the curable composition in an environment having an ambient temperature of from 50 to 150°C for about 30 minutes to 3 hours. On the other hand, the irradiation light for the curing treatment is, for example, an electron beam or ultraviolet light for the curable composition containing the component (C) having a photocurable group as a curable group. The kind of irradiation light and the irradiation conditions are appropriately selected depending on the kind of component (C). Generally, it is possible to form a hard coat layer which has a high strength and contributes to the improvement of abrasion resistance of the lens by irradiating the curable composition with ultraviolet light at an irradiation light dose of about from 500 to 2000 mJ/cm².

### (Primer layer)

The primer layer contains, for example, a resin. The primer layer is, for example, an aqueous resin layer formed from an aqueous resin composition containing a resin and an aqueous solvent.

The aqueous solvent contained in the aqueous resin composition is, for example, water or a mixed solvent of water and a polar solvent or the like, and it is preferably water. The solid concentration in the aqueous resin composition is preferably from 1 to 60% by mass and more preferably from 5 to 40% by mass from the viewpoint of liquid stability and film-forming property.

The aqueous resin composition can also contain additives such as an antioxidant, a dispersant, and a plasticizer if necessary in addition to the resin. However, it is preferable not to contain a metal atom from the viewpoint of weather resistance. Examples of the metal atom may include elements belonging to from the group 3 to the group 13 in the periodic table.

In addition, a commercially available aqueous resin composition may be used by being diluted with a solvent such as water, an alcohol, or propylene glycol monomethyl ether (PGM).

The aqueous resin composition can contain resin in a state of being dissolved in an aqueous solvent or a state of being dispersed as fine particles (preferably colloidal particles). Among them, the aqueous resin composition is desirably a dispersion in which the resin is dispersed in an aqueous solvent (preferably water) in the form of fine particles. In this case, the particle size of the resin is preferably 0.3 µm or less from the viewpoint of dispersion stability of the composition. In addition, the pH of the aqueous resin composition is preferably about from 5.5 to 9.0 at 25°C from the viewpoint of stability. The viscosity of the aqueous resin composition is preferably from 5 to 500 mPa·s and more preferably from 10 to 50 mPa·s at 25°C from the viewpoint of coating suitability. In addition, an aqueous resin composition having the following film properties is preferable in consideration of physical properties of the aqueous resin layer to be formed. The coating film obtained by coating a glass plate with the aqueous resin composition so as to have a thickness of 1 mm and drying this for 1 hour at 120°C has a glass transition temperature Tg of from -58°C to 7°C, a pencil hardness of from 4B to 2H, and a tensile strength measured in conformity to JISK 7113 of from 15 to 69 MPa.

Examples of the resin to form the primer layer may include at least one kind selected from a polyurethane resin, an acrylic resin, or an epoxy resin, and preferably the resin is a polyurethane resin. The aqueous resin composition containing a polyurethane resin, namely, an aqueous polyurethane resin composition can be prepared, for example, by subjecting a high molecular weight polyol compound and an organic polyisocyanate compound to a urethanization reaction in a solvent that is inert to the reaction and exhibits great affinity for water together with a chain extender if necessary to obtain a prepolymer, neutralizing this prepolymer, and then dispersing the prepolymer in an aqueous solvent containing a chain extender to increase the molecular weight. For such an aqueous polyurethane resin composition and the preparation method thereof, it is possible toreferto, for example, paragraphs [0009] to [0013] inJP3588375 B1, the paragraphs [0012] to [0021] in JP 8-34897 A, paragraphs [0010] to [0033] in JP11-92653 A, and paragraphs [0010] to [0033] in JP11-92655A. In addition, as the aqueous polyurethane resin composition, it is also possible to use a commercially available waterborne urethane as it is or by diluting it with an aqueous solvent if necessary. As the commercially available waterborne polyurethane, for example, it is possible to use the "EVAFANOL" series manufactured by NICCA CHEMICAL CO. , LTD. , the "SUPERFLEX" series manufactured by DKS Co., Ltd., the "ADEKA BONTIGHTER" series manufactured by Asahi Denka Kogyo Co. , Ltd. , the "OLESTER" series manufactured by Mitsui Chemicals, Inc., the "VONDIC" series and "HYDRAN" series manufactured by DIC Corporation, the "IMPRANIL" series manufactured by Bayer AG, the "SOFLANATE" series manufactured by Nippon Soflan the "POIZ" series manufactured by Kao Corporation, the "SANPRENE" series manufactured by Sanyo Chemical Industries, Ltd., the "IZELAX" series manufactured by Hodogaya Chemical CO., LTD., and the "NEOREZ" series manufactured by Zeneca Group PLC.

It is possible to form an aqueous resin layer as a primer layer by coating the surface of a substrate with the aqueous resin composition and drying the aqueous resin composition.

As the coating method, a known coating method such as a dipping method or a spin coating method can be used. The coating conditions may be appropriately set so as to form a primer layer having a desired film thickness. Before coating, the polarizing film surface of the surface to be coated can also be subjected to a chemical treatment using an acid, an alkali, various kinds of organic solvents, or the like, a physical treatment using plasma, ultraviolet light, ozone, or the like, and a detergent treatment using various kinds of detergents. By conducting such a pretreatment, it is possible to improve the adhesive property.

After coating with the aqueous resin composition, an aqueous resin layer can be formed as a primer layer by drying the composition. The drying can be conducted, for example, by placing the member on which the primer layer is formed in an atmosphere of from room temperature to 100°C for from 5 minutes to 24 hours.

### (Interference fringe suppressing layer)

The interference fringe suppressing layer preferably has an optical film thickness of from 0.2λ to 0.3λ in the light having a wavelength λ of from 450 to 650 nm in order to suppress the interference fringe.

The interference fringe suppressing layer is obtained, for example, by coating with a dispersion containing at least inorganic oxide particles and a resin.

The inorganic oxide particles are used from the viewpoint of adjusting the refractive index of the interference fringe suppressing layer, and examples thereof may include particles of tungsten oxide (WO₃), zinc oxide (ZnO), silicon oxide (SiO₂), aluminum oxide (Al₂O₃), titanium oxide (TiO₂), zirconium oxide (ZrO₂) , tin oxide (SnO₂) , beryllium oxide (BeO), antimony oxide (Sb₂O₅), and the like, and the inorganic oxide particles may be used singly or two or more kinds thereof may be concurrently used. In addition, it is also possible to use composite oxide particles of two or more kinds of metal oxides. The particle size of the inorganic oxide particles is preferably in a range of from 5 to 30 nm from the viewpoint of optical properties.

Examples of the resin of the interference fringe suppressing layer may include at least one kind selected from a polyurethane resin, an acrylic resin, or an epoxy resin, and preferably the resin is a polyurethane resin and more preferably it is an aqueous resin composition containing a polyurethane resin, namely, an aqueous polyurethane resin composition. Preferred examples of the aqueous polyurethane resin composition may include the resins exemplified in the primer layer.

The dispersion may contain an aqueous solvent. The aqueous solvent is, for example, water or a mixed solvent of water and a polar solvent or the like, and preferably it is water. The solid concentration in the aqueous resin composition is preferably from 1 to 60% by mass and more preferably from 5 to 40% by mass from the viewpoint of liquid stability and film-forming property. The aqueous resin composition can also contain additives such as an antioxidant, a dispersant, and a plasticizer if necessary in addition to the resin component. In addition, a commercially available aqueous resin composition may be used by being diluted with a solvent such as water, an alcohol, or propylene glycol monomethyl ether (PGM).

### (Antireflection layer)

The antiref lection layer may be provided on the hard coat layer. The antireflection layer, for example, has a configuration in which a low refractive index layer and a high refractive index layer are alternately disposed. The antireflection layer has preferably from 4 to 10 layers and more preferably from 5 to 8 layers.

The refractive index of the low refractive index layer is preferably from 1.35 to 1.80 and more preferably from 1.45 to 1. 50 at a wavelength of from 500 to 550 nm. The low refractive index layer is formed of an inorganic oxide, and preferably it is formed of SiO₂.

The refractive index of the high refractive index layer is preferably from 1.90 to 2.60 and more preferably from 2.00 to 2.40 at a wavelength of from 500 to 550 nm.

The high refractive index layer is, for example, formed of an inorganic oxide. The inorganic oxide used in the high refractive index layer is preferably at least one kind of inorganic oxide selected from ZrO₂, Ta₂O₅, Y₂O₃, TiO₂, Nb₂O₅, and Al₂O₃ and more preferably ZrO₂ or Ta₂O₅.

The spectacle lens of the present invention may have a hard coat layer and other functional layers only on the surface of the lens substrate or on the rear surface thereof as well. The spectacle lens is preferably a plastic lens for spectacle of which the lens substrate is a plastic.

### Examples

Hereinafter, the present invention will be described in more detail with reference to Examples, but the present invention is not limited to these Examples. Incidentally, the evaluation of the plastic lenses obtained in Examples and Comparative Examples were carried out as follows.

### [Average film thickness of hard coat layer]

The average film thickness of the hard coat layer was measured by using a lens substrate on which the hard coat layer was formed and a non-contact type film thickness measuring apparatus (non-contact film thickness measuring instrument FF 8 manufactured by SystemRoad co., Ltd.) by the optical interference method.

### [Impact resistance test]

A lens having a lens center thickness (referred to as CT) of 1.0 mm and a lens power of 0.00 D (diopters) was fabricated, subjected to a test (an iron ball having a weight of 7 g was dropped from a height of 127 cm) conforming to the drop ball test defined by the United States Food and Drug Administration (FDA), and evaluated according to the following criteria.
A appearance of lens is not changed from that before drop ball test
B scratches are generated on surface of lens after drop ball test
C surface of lens is cracked or fractured after drop ball test

### [Test for durability against hot water]

The surface of the spectacle lens was cut by 1 cm with a cutter knife so that the cuts intersect vertically and horizontally, the spectacle lens was immersed in hot water at 60°C, and the generation of cracks was confirmed every 2 hours. The time at which the generation of cracks was confirmed was recorded.

### [Test for durability in QUV]

The surface of the spectacle lens was cut by 1 cm with a cutter knife so that the cuts intersect vertically and horizontally, the spectacle lens was (1) irradiated with ultraviolet light of 0.77 W for 4 hours and then (2) put in a high-humidity environment (humidity: 90%) for 4 hours in the QUV ultraviolet fluorescent tube type accelerated weathering tester manufactured by Q-Lab Corporation. The cycle consisting of (1) and (2) was repeated until 100th hour, and evaluation was carried out according to the following criteria.
5 no cracks at all
4 cracks in 1 mm or less at tip
3 cracks in 5 mm or less at tip
2 cracks on the entire surface
1 cracks on the entire surface in white

### [Diamond scratch test (DS test)]

A diamond stylus having a tip curvature radius of 50 µm was installed to a continuous load type surface measuring machine (Type 22 manufactured by Shinto Scientific Co., ltd.), the spectacle lens and the diamond stylus were linearly relatively moved at a velocity of 10 mm/sec while gradually increasing the contact load between them at 1 g/sec to form scratches. The load was determined from the position at which the scratches started to be visually recognized under a fluorescent lamp and adopted as the "scratch generating load", and the scratches were observed under a microscope, and the load was determined from the position at which the surface film of the spectacle lens started to be cut and adopted as the "film peeling off load".

Incidentally, the color of the scratches to be formed is in a state indicating white as the surface film is cut. In this manner, scratches conspicuous even with a naked eye are formed when the surface film is cut.

### [Initial crack]

It was evaluated so that F was granted in a case in which cracks were generated at the time of manufacture and P was granted in a case in which cracks were not generated at the time of manufacture.

### [Initial adhesion]

The spectacle lens surface was crosscut to form 100 meshes at an interval of 1.5 mm, pressure-sensitive adhesive tape (CELLOTAPE (registered trademark) manufactured by NICHIBAN CO., LTD.) was strongly attached to this crosscut place and the pressure-sensitive adhesive tape was then rapidly detached therefrom, and the presence or absence of peeling off of the cured film was then examined.

It was evaluated so that 100/100 was granted in a case in which 100 meshes were not peeled off at all and 0/100 was granted in a case in which all of 100 meshes were peeled off.

### [Evaluation on interference fringe]

The interference fringe was evaluated according to the following criteria as a visual result of the appearance under a three-wavelength fluorescent lamp in a dark room or under a white fluorescent lamp in a normal room.
5 interference fringes are invisible at all even in dark room
4 interference fringes are slightly visible on the entire lens surface in dark room
3 interference fringes are visible on the entire lens surface in dark room
2 interference fringes are clearly visible on the entire lens surface in dark room
1 interference fringes are clearly visible on the entire lens surface in normal room

### [Hydrostatic test]

The test was conducted in conformity to the mechanical strength test (JIS hydrostatic test) JIS T 7331: 2006. The results were evaluated according to the following criteria.
A no scratches
B cracks
C penetrating fracture

### [Example 1]

The plastic lens substrate (plastic lens for spectacle, trade name: EYNOA manufactured by HOYA CORPORATION, refractive index: 1.67) was washed.

### (Primer layer)

The mixture containing the components presented in Table 1 was stirred for 24 hours at 20°C, thereby obtaining the primer liquid PR1.

The primer liquid thus obtained was applied on the plastic lens substrate by a dipping method and dried and solidified for 20 minutes at 100°C, thereby forming a primer layer on both surfaces of the lens substrate.

### (Hard coat layer)

To 8 parts by mass of an organosilicon compound γ-glycidoxypropyltrimethoxysilane (KBM-403 manufactured by Shin-Etsu Chemical Co. , Ltd.), 30 parts by mass of methanol was added as a solvent.

This was stirred for 10 minutes, 1.0 part by mass of 1 mol/L nitric acid was then added thereto as a pH adjusting agent, and the mixture was further stirred for 10 minutes. To the solution thus obtained, 10 parts by mass (based on solid) of silica particles (silica sol, trade name: PGM-ST manufactured by NISSAN CHEMICAL INDUSTRIES, LTD.) was added, and the mixture was stirred for 24 hours at room temperature.

After the mixture was stirred for 24 hours, 6 parts by mass of a polyfunctional epoxy compound (trimethylolpropane oil glycidyl ether, bi- to trifunctional, trade name: EX-321 manufactured by Nagase ChemteX Corporation), 1 part by mass of aluminum acetylacetonate as a curing agent, and 0.1 part by mass of a leveling agent (FZ-77 manufactured by Dow Corning Toray) were added thereto, and the mixture was further stirred for 48 hours at room temperature, thereby preparing the hard coat liquid.

The hard coat liquid was applied on the lens substrate on which the primer layer was formed by a spray method such that the thickness of the cured film to be formed became from 20 to 40 µm.

Thereafter, the hard coat liquid was pre-cured for 20 minutes at 75°C and subsequently cured for 2 hours at 110°C, thereby fabricating a spectacle lens having a hard coat layer on both surfaces.

Through the above processes, a spectacle lens respectively having a hard coat layer on both surfaces of the lens substrate via a primer layer.

### (AR layer)

Next, the antireflection layer (AR layer) in which the layers described in the table were alternately laminated was formed on the hard coat layer by a vacuum deposition method, thereby obtaining a plastic lens. The plastic lens thus obtained was evaluated, and the results thereof are presented in the following tables.

[Table 1]

**Table 1**

| Primer liquid | | | PR1 | PR2 | PR3 |
|---|---|---|---|---|---|
| Blended amount (parts by mass) | Solvent | Methanol | 305 | 305 | 305 |
| | | DAA*1 | 126 | 126 | 126 |
| | | Water | 350 | 350 | 350 |
| | Thermoplastic resin | HA-15*2 | 218 | - | - |
| | | HA-170*3 | - | 218 | - |
| | | S470*4 | - | - | 218 |
| | Leveling agent | Y-7006*5 | 1 | 1 | 1 |

| | | | | | |
|---|---|---|---|---|---|
| *1 4-hydroxy-4-methyl-2-pentanone (DAA) *2 EVAFANOL HA-15 (aqueous urethane resin) manufactured by NICCA CHEMICAL CO., LTD. *3EVAFANOLHA-170 (aqueous urethane resin) manufactured by NICCA CHEMICAL CO., LTD. *4 SUPERFLEX 470 (aqueous urethane resin) manufactured by DKS Co., Ltd. *5 Y-7006 manufactured by Dow Corning Toray | | | | | |

[Table 2]

**Table 2**

| | Name of PR liquid | Name of resin kind | Film thickness [µm] | | Impact resistance test | Durability against hot water [hr] | QUV [hr] | DS test | | Initial crack | Initial adhesion | Interference fringe | Hydrostatic test |
|---|---|---|---|---|---|---|---|---|---|---|---|---|---|
| | | | PR layer | HC layer | | | | Scratch generating load [gf] | Film peeling off load [gf] | | | | |
| Example 1 | PR1 | HA-15 | 0.48 | 20 | B | 8 | 5 | 105 | 288 | P | 100 | 4 | B |
| Example 2 | PR1 | HA-15 | 0.74 | 20 | B | 8 | 5 | 138 | 257 | P | 100 | 4 | A |
| Example 3 | PR1 | HA-15 | 1.09 | 20 | B | 8 | 5 | 100 | 293 | P | 100 | 2 | A |
| Comparative Example 1 | PR1 | HA-15 | 2.56 | 20 | A | 2 | 3 | 80 | 233 | F | 100 | 2 | A |
| Comparative Example 2 | PR1 | HA-15 | 6.96 | 20 | A | 2 | 3 | 18 | 147 | F | 100 | 2 | A |
| Example 4 | PR2 | HA-170 | 0.49 | 20 | B | 8 | 5 | 110 | 297 | P | 100 | 4 | B |
| Example 5 | PR2 | HA-170 | 0.64 | 20 | B | 8 | 5 | 128 | 252 | P | 100 | 4 | A |
| Example 6 | PR2 | HA-170 | 0.79 | 20 | B | 8 | 5 | 115 | 283 | P | 100 | 3 | A |
| Comparative Example 3 | PR2 | HA-170 | 2.10 | 20 | A | 4 | 3 | 95 | 253 | P | 100 | 2 | A |
| Comparative Example 4 | PR2 | HA-170 | 3.40 | 20 | A | 4 | 3 | 40 | 197 | F | 100 | 2 | A |
| Example 7 | PR3 | S470 | 0.49 | 20 | B | 8 | 5 | 105 | 282 | P | 100 | 4.5 | C |
| Example 8 | PR3 | S470 | 0.69 | 20 | B | 8 | 5 | 100 | 251 | P | 100 | 4 | A |
| Example 9 | PR3 | S470 | 0.88 | 20 | B | 8 | 4 | 95 | 284 | P | 100 | 3 | A |
| Comparative Example 5 | PR3 | S470 | 2.73 | 20 | A | 4 | 3 | 90 | 253 | P | 100 | 2 | A |
| Comparative Example 6 | PR3 | S470 | 5.71 | 20 | A | 4 | 3 | 45 | 209 | F | 100 | 2 | A |

As described above, from the results of Examples and Comparative Examples, it has been found that excellent results are obtained in the hot water resistance test and the QUV test and high weather resistance is exhibited as well as favorable results are obtained in the impact resistance test in a case in which the primer layer has a film thickness in a predetermined range. Additionally, it has been found out that it is possible to increase the scratch generating load in the diamond scratch test, the abrasion resistance of the surface is enhanced, and it is possible to increase the film peeling off load and also to enhance the scratch property of the surface by setting the film thickness of the primer layer into a predetermined range. In addition, it has also been found out that an effect of suppressing the generation of initial cracks or the interference fringe is obtained as the primer layer is in the above predetermined range.

## Claims

1. A spectacle lens comprising:
a lens substrate;
a primer layer; and
a hard coat layer, wherein
a film thickness of the hard coat layer is 10 µm or more and 100 µm or less, and
a film thickness of the primer layer is 0.4 µm or more and 2.0 µm or less.

2. The spectacle lens according to claim 1, wherein a film thickness of the primer layer is 0.4 µm or more and 1.2 µm or less.

3. The spectacle lens according to claim 1 or 2, wherein the primer layer contains a resin.

4. The spectacle lens according to claim 3 , wherein the resin contains a polyurethane resin.

5. The spectacle lens according to any one of claims 1 to 4, wherein the primer layer does not contain a metal atom.

6. The spectacle lens according to any one of claims 1 to 5, wherein the hard coat layer is obtained by curing a curable composition containing inorganic oxide particles and a silicon compound.
